(19) **Europäisches Patentamt / European Patent Office / Office européen des brevets**

(11) **EP 3 783 391 A1**

(12) # EUROPEAN PATENT APPLICATION
published in accordance with Art. 153(4) EPC

(43) Date of publication:
**24.02.2021 Bulletin 2021/08**

(21) Application number: **18942353.6**

(22) Date of filing: **03.12.2018**

(51) Int Cl.:
*G01S 17/95* (2006.01)     *G01S 17/32* (2020.01)

(86) International application number:
**PCT/CN2018/118859**

(87) International publication number:
**WO 2020/113356 (11.06.2020 Gazette 2020/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nanjing Movelaser Technology Co., Ltd.**
**Nanjing, Jiangsu 210000 (CN)**

(72) Inventors:
• **ZHOU, Jun**
  **Shanghai 201800 (CN)**
• **XIAO, Zengli**
  **Nanjing, Jiangsu 210000 (CN)**
• **ZHU, Hailong**
  **Nanjing, Jiangsu 210000 (CN)**
• **TANG, Anqing**
  **Nanjing, Jiangsu 211516 (CN)**

(74) Representative: **Petculescu, Ana-Maria**
**Bayramoglu Law Offices LLC Türkiye**
**Irtibat Ofisi, Mira Office, Kanuni Sultan Süleyman Boulevard, 5387. street**
**Beytepe, floor 12, no:50**
**06800 Cankaya, Ankara (TR)**

(54) **WIND FIELD INFORMATION MEASUREMENT METHOD AND ENGINE ROOM-TYPE LASER RADAR**

(57)     A wind field information measurement method and a nacelle-based lidar, relating to the field of wind power generation. The method comprises: sending, by a multi-wavelength laser (110), light signals having at least two different wavelengths; splitting, by a beam splitter (120), the light signals into at least a first light signal and a second light signal; transmitting, by a frequency modulator (130), a first light pulse signal obtained after frequency modulation on the first light signal and a second light pulse signal obtained after frequency modulation on the second light signal; acquiring, by a signal processing device (140), a return light signal formed in a manner of combining, by a beam combiner (150), a first return light signal returned after the first light pulse signal is scattered by aerosols in the atmosphere and a second return light signal returned after the second light pulse signal is scattered by aerosols in the atmosphere; and obtaining, by the signal processing device (140), wind field information on the basis of the return light signal. By measuring the wind field information by simultaneously transmitting at least two light signals having different wavelengths, the accuracy of the measurement is improved.

| Nacelle-based lidar 100 | | | | |
|---|---|---|---|---|
| Multi-wavelength laser 110 | Beam splitter 120 | Frequency modulator 130 | Signal processing device 140 | Beam combiner 150 |

FIG. 2

EP 3 783 391 A1

## Description

## Technical Field

The present disclosure relates to the technical field of wind power generation, and in particular, to a wind field information measurement method and a nacelle-based lidar.

## Background

In wind power generation, wind field information is measured by using a nacelle-based lidar mounted on a wind turbine. The nacelle-based lidar has the advantages of long detection range and small interference from wind turbine wakes, so it can detect information of the wind field right in front of the wind turbine and provide a basis for load reduction and yaw correction of the wind turbine, thereby achieving the maximum operating efficiency of the wind turbine and increasing power generation capacity.

In the prior art, taking the transmission of two light signals for example, a lidar periodically and alternately emits two beams at a fixed frequency, so as to periodically transmit two light signals for detection of the wind field information. However, in the process of obtaining the wind field information, the wind field information continuously varies and great changes may occur in the wind velocity, wind direction, or the like. Due to the transmission time interval between the two light signals, the wind field information in the time interval cannot be detected; therefore, the wind field information obtained in this manner is inaccurate.

## Summary

To eliminate at least one of the deficiencies in the prior art, the present disclosure provides a wind field information measurement method and a nacelle-based lidar.

In a first aspect of the present disclosure, a wind field information measurement method is provided and applied in a nacelle-based lidar, the nacelle-based lidar is mounted on a wind turbine and comprises a multi-wavelength laser, a beam splitter, a frequency modulator, a beam combiner, and a signal processing device, the multi-wavelength laser is connected to the beam splitter, the beam splitter is connected to the frequency modulator, the frequency modulator is connected to the signal processing device, and the beam combiner is connected to the signal processing device, the method comprising:

sending, by the multi-wavelength laser, light signals having at least two different wavelengths;

splitting, by the beam splitter, the light signals into at least a first light signal and a second light signal, the wavelength of the first light signal being a first wavelength, and the wavelength of the second light signal being a second wavelength;

transmitting, by the frequency modulator, a first light pulse signal obtained after frequency modulation on the first light signal and a second light pulse signal obtained after frequency modulation on the second light signal;

acquiring, by the signal processing device, a return light signal formed in a manner of combining, by the beam combiner, a first return light signal returned after the first light pulse signal is scattered by aerosols in the atmosphere and a second return light signal returned after the second light pulse signal is scattered by aerosols in the atmosphere; and

obtaining, by the signal processing device, wind field information based on the return light signal.

In the above implementation process, the wind field information is measured by simultaneously transmitting at least two light signals of different wavelengths, so that the wind field information can be measured in real time, thereby avoiding the problem in the prior art that because two light signals are periodically and alternately transmitted for measurement of the wind field information, the wind field information in the transmission time interval cannot be measured, resulting in inaccurate measurement of the wind field information.

Optionally, the obtaining, by the signal processing device, wind field information based on the return light signal comprises: calculating, by the signal processing device, a power spectrum of the return light signal; and obtaining, by the signal processing device, the wind field information according to the power spectrum of the return light signal.

In the above implementation process, since the power spectrum of the return light signal carries corresponding wind field information, it can be more convenient to obtain the wind field information according to the power spectrum of the return light signal.

Optionally, the obtaining, by the signal processing device, the wind field information according to the power spectrum of the return light signal comprises: obtaining, by the signal processing device, a first radial velocity based on $v_1 = \lambda_1(f_{p1}\text{-}f_1)/2$ or $v_1 = \lambda_1(f_{p2}\text{-}f_1)/2$ obtaining, by the signal processing device, a second radial velocity based on $v_2 = \lambda_2(f_{p2}\text{-}f_2)/2$ or $v_2 = \lambda_2(f_{p1}\text{-}f_2)/2$ ; and obtaining, by the signal processing device, wind velocity and wind direction in the wind field information based on

$$\begin{cases} u = \dfrac{v_1 + v_2}{2\cos\dfrac{\gamma}{2}} \\[3mm] v = \dfrac{v_1 - v_2}{2\sin\dfrac{\gamma}{2}} \end{cases},$$

wherein y is an angle between the first return light signal and the second return light signal, $\lambda_1$ is the wavelength of the first light signal, $\lambda_2$ is the wavelength of the second light signal, $f_1$ is the frequency of the first light signal, $f_2$ is the frequency of the second light signal, $f_{p1}$ and $f_{p2}$ are two peak frequencies in the power spectrum of the return light signal, the wind velocity is $v_g = \sqrt{u^2 + v^2}$, and the wind direction is $\theta_g = \arctan\left(\dfrac{v}{u}\right)$.

In the above implementation process, the wind velocity and the wind direction in the wind field information can be obtained through vector operation according to the information carried in the first return light signal and the second return light signal, and thereby more accurate information of the wind field in front of the wind turbine can be obtained.

Optionally, the nacelle-based lidar further comprises a pulse generator, the pulse generator being connected to the frequency modulator; the transmitting, by the frequency modulator, a first light pulse signal obtained after frequency modulation on the first light signal and a second light pulse signal obtained after frequency modulation on the second light signal comprises: acquiring, by the frequency modulator, a first pulse signal and a second pulse signal generated by the pulse generator; performing, by the frequency modulator, frequency modulation on the first light signal $x = \cos(2\pi f_1 t)$ and the first pulse signal to obtain a first transmit signal $y_1 = \cos\left(2\pi(f_1 + \Delta f_1)t\right) rect\left(\dfrac{\tau}{T}\right)$ and transmitting the first transmit signal; and performing, by the frequency modulator, frequency modulation on the second light signal $x = \cos(2\pi f_2 t)$ and the second pulse signal to obtain a second transmit signal $y_2 = \cos\left(2\pi(f_2 + \Delta f_2)t\right) rect\left(\dfrac{\tau}{T}\right)$ and transmitting the second transmit signal, wherein $f_1$ is the frequency of the first light signal, $f_2$ is the frequency of the second light signal, $\tau$ is pulse width, $T$ is a repetition cycle of the pulse signal, $\Delta f_1$ is a frequency shift of the first light signal, and $\Delta f_2$ is a frequency shift of the second light signal.

In the above implementation process, the pulse generator generates the pulse signals, and the frequency modulator performs frequency modulation on the first light signal and the second light signal based on the pulse signals, so that the frequency modulator does not need to generate pulse signals for the frequency modulation on the light signals, thereby reducing the data processing load of the frequency modulator.

Optionally, to ensure that aliasing does not occur in the frequency spectrum of the return light signals, $|f_1 - f_2| > \Delta f_1$ and $|f_1 - f_2| > \Delta f_2$.

Optionally, to ensure that Doppler frequencies of the two light pulse signals can be distinguished from each other, $\Delta f_1$ differs from $\Delta f_2$ by a preset frequency value.

Optionally, the signal processing device comprises a coupler and a signal processor, the coupler being connected to the multi-wavelength laser, the beam combiner, and the signal processor; before the acquiring, by the signal processing device, a return light signal formed in a manner of combining, by the beam combiner, a first return light signal returned after the first light pulse signal is scattered by aerosols in the atmosphere and a second return light signal returned after the second light pulse signal is scattered by aerosols in the atmosphere, the method further comprises: beating, by the coupler, the obtained initial return light signal with the light signal to obtain the return light signal, wherein the initial return light signal is $y_r = \sum_i \cos\left(2\pi(f_i + \Delta f_i + f_{d_i})t\right)$ the light signal is $x = \cos(2\pi f_1 t) + \cos(2\pi f_2 t)$, and the return light signal is $y_d = \sum_i \cos\left(2\pi(\Delta f_i + f_{d_i})t\right)$; $i=1, 2$, $f_i$ is the frequency corresponding to the $i^{th}$ light signal, $\Delta f_i$ is a frequency shift corresponding to the $i^{th}$ wavelength, and $f_{d_i}$ is a Doppler frequency of the return light signal.

In the above implementation process, since the frequency of the return light signal is generally large, the beating of the return light signal with the light signal by the coupler facilitates subsequent optical-to-electrical conversion of the return light signal.

Optionally, the signal processing device further comprises a sampler, the sampler being connected to the coupler and the signal processor; before the obtaining, by the signal processing device, wind field information based on the return light signal, the method further comprises:

sampling, by the sampler, the return light signal to obtain a sampled return light signal,

wherein the sampling frequency satisfies the Nyquist sampling theorem: $Fs \geq 2Max(\Delta f_i + B/2)$, the sampled return light signal is $s(n) = \sum_i \cos\left(2\pi(\Delta f_i + f_{d_i})\dfrac{2\pi n}{Fs}\right)$, $B$ is signal bandwidth, and $n$ is the number of sampling points.

In a second aspect of the present disclosure, a nacelle-based lidar is provided, which is mounted on a wind turbine and comprises a multi-wavelength laser, a beam splitter, a frequency modulator, a beam combiner, and a signal processing device, the multi-wavelength laser is connected to the beam splitter, the beam splitter is connected to the frequency modulator, the frequency modulator is connected to the signal processing device, and the beam combiner is connected to the signal processing device;

the multi-wavelength laser is used for sending light signals having at least two different wavelengths;

the beam splitter is used for splitting the light signals into at least a first light signal and a second light signal, the wavelength of the first light signal being a first wavelength, and the wavelength of the second light signal being a second wavelength;

the frequency modulator is used for transmitting a first light pulse signal obtained after frequency modulation on the first light signal and a second light pulse signal obtained after frequency modulation on the second light signal;

the signal processing device is used for acquiring a return light signal formed in a manner of combining, by the beam combiner, a first return light signal returned after the first light pulse signal is scattered by aerosols in the atmosphere and a second return light signal returned after the second light pulse signal is scattered by aerosols in the atmosphere; and

the signal processing device is further used for obtaining wind field information based on the return light signal.

Optionally, the signal processing device is further used for calculating a power spectrum of the return light signal; and obtaining the wind field information according to the power spectrum of the return light signal.

Optionally, the signal processing device is further used for obtaining a first radial velocity based on $v_1 = \lambda_1(f_{p_1}-f_1)/2$ or $v_1 = \lambda_1(f_{p_2}-f_1)/2$; obtaining a second radial velocity based on $v_2 = \lambda_1(f_{p_2}-f_2)/2$ or $v_2 = \lambda_2(f_{p_1}-f_2)/2$; and obtaining wind velocity and wind direction in the wind field information based on

$$\begin{cases} u = \dfrac{v_1 + v_2}{2\cos\dfrac{\gamma}{2}} \\ v = \dfrac{v_1 - v_2}{2\sin\dfrac{\gamma}{2}} \end{cases},$$

wherein y is an angle between the first return light signal and the second return light signal, $\lambda_1$ is the wavelength of the first light signal, $\lambda_2$ is the wavelength of the second light signal, $f_1$ is the frequency of the first light signal, $f_2$ is the frequency of the second light signal, $f_{p1}$ and $f_{p2}$ are two peak frequencies in the power spectrum of the return light signal, the wind velocity is $v_g = \sqrt{u^2 + v^2}$, and the

wind direction is $\theta_g = \arctan\left(\dfrac{v}{u}\right)$.

Optionally, the nacelle-based lidar further comprises a pulse generator, the pulse generator being connected to the frequency modulator;

the frequency modulator is further used for acquiring a first pulse signal and a second pulse signal generated by the pulse generator;

the frequency modulator is further used for performing frequency modulation on the first light signal $x = \cos(2\pi f_1 t)$ and the first pulse signal to obtain a first transmit signal $y_1 = \cos\left(2\pi(f_1 + \Delta f_1)t\right)rect\left(\dfrac{\tau}{T}\right)$ and transmitting the first transmit signal; and

the frequency modulator is further used for performing frequency modulation on the second light signal $x = \cos(2\pi f_2 t)$ and the second pulse signal to obtain a second transmit signal $y_2 = \cos\left(2\pi(f_2 + \Delta f_2)t\right)rect\left(\dfrac{\tau}{T}\right)$ and transmitting the second transmit signal,

wherein $f_1$ is the frequency of the first light signal, $f_2$ is the frequency of the second light signal, $\tau$ is pulse width, $T$ is a repetition cycle of the pulse signal, $\Delta f_1$ is a frequency shift of the first light signal, and $\Delta f_2$ is a frequency shift of the second light signal.

Optionally, $|f_1-f_2|>\Delta f_1$ and $|f_1-f_2|>\Delta f_2$.

Optionally, $\Delta f_1$ differs from $\Delta f_2$ by a preset frequency value.

Optionally, the signal processing device comprises a coupler and a signal processor, the coupler being connected to the multi-wavelength laser, the beam combiner, and the signal processor;

the coupler is used for beating the obtained initial return light signal with the light signal to obtain the return light signal,

wherein the initial return light signal is $y_r = \sum_i \cos\left(2\pi(f_i + \Delta f_i + f_{d_i})t\right)$ the light signal is $x = \cos(2\pi f_1 t)+\cos(2\pi f_2 t)$, and the return light signal is $y_d = \sum_i \cos\left(2\pi(\Delta f_i + f_{d_i})t\right)$;

$i$=1, 2, $f_i$ is the frequency corresponding to the $i^{th}$ light signal, $\Delta f_i$ is a frequency shift corresponding to the $i^{th}$ wavelength, and $f_{d_i}$ is a Doppler frequency of the return light signal.

Optionally, the signal processing device further comprises a sampler, the sampler being connected to the coupler and the signal processor;

the sampler is used for sampling the return light signal to obtain a sampled return light signal,

wherein the sampling frequency satisfies the Nyquist sampling theorem: $F_s \geq 2Max(\Delta f_i+B/2)$, the sampled return light signal is $s(n) = \sum_i \cos\left(2\pi(\Delta f_i + f_{d_i})\frac{2\pi n}{Fs}\right)$, $B$ is signal bandwidth, and $n$ is the number of sampling points.

Optionally, the signal processing device further comprises a balanced detector, the balanced detector being connected to the coupler and the sampler.

Optionally, the nacelle-based lidar further comprises a circulator, the circulator being connected to the frequency modulator and the beam splitter.

Optionally, the nacelle-based lidar further comprises a first optical filter and a second optical filter, the first optical filter and the second optical filter being both connected to the beam splitter; the first optical filter is used for filtering the first light signal and then sending the signal to the frequency modulator; and the second optical filter is used for filtering the second light signal and then sending the signal to the frequency modulator.

Compared with the prior art, the present disclosure has the following beneficial effects:

Embodiments of the present disclosure provide a wind field information measurement method and a nacelle-based lidar. In the method, the multi-wavelength laser sends light signals having at least two different wavelengths; the beam splitter splits the light signals into at least a first light signal and a second light signal; the frequency modulator transmits a first light pulse signal obtained after frequency modulation on the first light signal and a second light pulse signal obtained after frequency modulation on the second light signal; the signal processing device acquires a return light signal formed in a manner of combining, by the beam combiner, a first return light signal returned after the first light pulse signal is scattered by aerosols in the atmosphere and a second return light signal returned after the second light pulse signal is scattered by aerosols in the atmosphere; and the signal processing device obtains wind field information based on the return light signal. Therefore, in this solution, the wind field information is measured by simultaneously transmitting at least two light signals having different wavelengths, so that the wind field information can be accurately measured in real time and the data effective rate and data refresh rate can be effectively improved, thereby avoiding the problem in the prior art that because two light signals are periodically and alternately transmitted for measurement of the wind field information and a single beam is blocked by an impeller of the wind turbine, the data refresh rate and data effective rate are reduced and the wind field information in the transmission time interval cannot be measured, resulting in inaccurate measurement of the wind field information.

**Brief Description of the Drawings**

To describe the technical solutions in the embodiments of the present disclosure more clearly, the following briefly introduces the accompanying drawings required for describing the embodiments. It should be understood that, the accompanying drawings in the following description show merely some embodiments of the present disclosure, and shall not be construed as limitations to the scope of the present disclosure. Persons of ordinary skill in the art can derive other related drawings from these accompanying drawings without creative efforts.

FIG. 1 is a schematic diagram showing the installation of a nacelle-based lidar according to an embodiment of the present disclosure;

FIG. 2 is a schematic diagram showing a structure of the nacelle-based lidar according to an embodiment of the present disclosure;

FIG. 3 is a schematic diagram of wind field information according to an embodiment of the present disclosure;

FIG. 4 is a schematic diagram showing another structure of the nacelle-based lidar according to an embodiment of the present disclosure;

FIG. 5 is a schematic diagram showing range gate division of a return light signal according to an embodiment of the present disclosure; and

FIG. 6 is a flow chart of a wind field information measurement method according to an embodiment of the present disclosure.

Reference signs: 100, nacelle-based lidar; 110, multi-wavelength laser; 120, beam splitter; 130, frequency modulator; 132, first frequency modulator; 134, second frequency modulator; 140, signal processing device; 142, coupler; 144, signal processor; 146, sampler; 148, balanced detector; 150, beam combiner; 160, first optical filter; 170, second optical filter; 180, first pulse generator; 190, second pulse generator; 200, circulator.

**Detailed Description of the Embodiments**

In order to make the objectives, technical solutions, and advantages of the embodiments of the present disclosure clearer, the technical solutions in the embodiments of the present disclosure are clearly and completely described below with reference to the accompanying drawings of the embodiments of the present disclosure. Apparently, the described embodiments are merely a part rather than all of the embodiments of the present disclosure. The components described and demonstrated in the accompanying drawings of the embodiments of the present disclosure can generally be arranged and designed in various configurations.

Therefore, the detailed descriptions of the embodiments of the present disclosure with reference to the accompanying drawings are not intended to limit the protection scope of the present disclosure, but merely illustrate selected embodiments of the present disclosure. Based on the embodiments of the present disclosure, all other embodiments obtained by persons of ordinary skill in the art without creative efforts shall fall within the protection scope of the present disclosure.

It should be noted that, similar reference numerals and letters indicate similar items in the following figures. Therefore, once an item is defined in one figure, it does not need to be further defined and explained in the subsequent figures.

In the description of the present disclosure, it should be noted that the terms "first", "second", "third", and the like are only used for distinguishing, instead of indicating or implying relative importance.

In the description of the present disclosure, it should also be noted that, unless otherwise clearly specified and limited, the terms "setup", "installation", "interconnection", and "connection" should be understood in a broad sense. For example, it may be fixed connection, detachable connection, or integral connection; it may be mechanical connection or electrical connection; it may be direct connection or indirect connection through a medium, and it may be internal communication between two elements. For persons of ordinary skill in the art, the specific meanings of the above terms in the present disclosure can be understood according to specific situations.

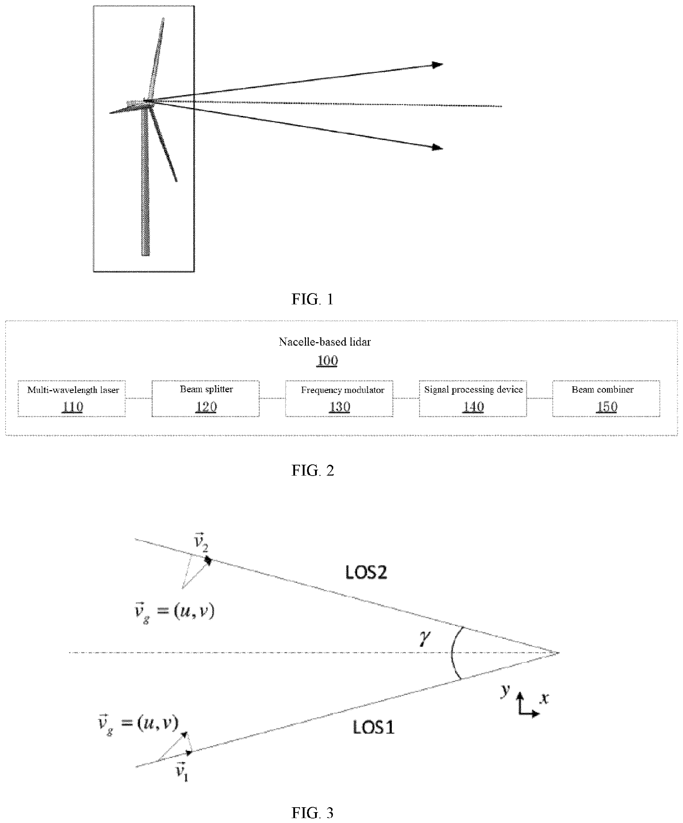

Referring to FIG. 1 and FIG. 2, FIG. 1 is a schematic diagram showing the installation of a nacelle-based lidar 100 according to an embodiment of the present disclosure, and FIG. 2 is a structural diagram of the nacelle-based lidar 100 according to an embodiment of the present disclosure. The nacelle-based lidar 100 is mounted on a wind turbine and includes a multi-wavelength laser 110, a beam splitter 120, a frequency modulator 130, a beam combiner 150, and a signal processing device 140. The multi-wavelength laser 110 is connected to the beam splitter 120, the beam splitter 120 is connected to the frequency modulator 130, the frequency modulator 130 is connected to the signal processing device 140, and the beam combiner 150 is connected to the signal processing device 140.

The multi-wavelength laser 110 is used for sending light signals having at least two different wavelengths.

The beam splitter 120 is used for splitting the light signals into at least a first light signal and a second light signal, the wavelength of the first light signal being a first wavelength, the wavelength of the second light signal being a second wavelength, and the first wavelength being different from the second wavelength.

The frequency modulator 130 is used for transmitting a first light pulse signal obtained after frequency modulation on the first light signal and a second light pulse signal obtained after frequency modulation on the second light signal.

The beam combiner 150 is used for acquiring a first return light signal returned after the first light pulse signal is scattered by aerosols in the atmosphere and a second return light signal returned after the second light pulse signal is scattered by aerosols in the atmosphere, and combining the first return light signal and the second return light signal into a return light signal.

The signal processing device 140 is used for acquiring the return light signal formed by the beam combiner 150.

The signal processing device 140 is further used for obtaining wind field information based on the return light signal, the wind field information being information of the wind field in front of the wind turbine.

Since the multi-wavelength laser 110 sends light signals having at least two different wavelengths, if the light signals have two wavelengths, the light signals can be denoted by: $x = \cos(2\pi f_1 t) + \cos(2\pi f_2 t)$, wherein $f_1$ is the frequency of the first light signal, $f_2$ is the frequency of the second light signal, $f_1 = c/\lambda_1$ and $f_2 = c/\lambda_2$, $\lambda_1$ is the wavelength of the first light signal, that is, a first wavelength, and $\lambda_2$ is the wavelength of the second light signal, that is, a second wavelength.

To enable some parameters of the first light signal and the second light signal, such as amplitude, frequency, phase, polarization state, and duration to vary following a certain pattern, the frequencies of the first light signal and the second light signal need to be modulated, that is, the frequency modulator 130 is used for transmitting a first light pulse signal and a second light pulse signal obtained after frequency modulation on the first light signal and the second light signal. The frequency modulator 130 may be specifically an acousto-optical modulator (AOM) adopted to perform frequency modulation on the two light signals.

The first return light signal returned after the first light pulse signal is scattered by aerosols in the atmosphere is received by an optical antenna in the nacelle-based lidar 100, and the second return light signal returned after the second light pulse signal is scattered by aerosols in the atmosphere is received by the optical antenna in the nacelle-based lidar 100. The beam combiner 150 combines the first return light signal and the second return light signal into a return light signal, and the signal processing device 140 obtains the wind field information based on the return light signal.

The light signal is scattered after being transmitted into the atmosphere, and is then received by a telescope in the nacelle-based lidar 100, that is, the telescope receives the return light signal carrying information of a Doppler shift caused by the atmospheric wind field, and the signal processing device 140 can calculate the wind velocity and direction, that is, obtain the wind field information by measuring the Doppler shift of the return light signal.

Therefore, in the embodiment of the present disclosure, the multi-wavelength laser 110 sends light signals having at least two different wavelengths, and the beam splitter 120 splits the light signals into two light signals, that is, the nacelle-based lidar 100 simultaneously transmits at least two light signals, and then the signal processing device 140 obtains the wind field information based on the received return light signal. Therefore, the wind field information is measured by simultaneously transmitting two light signals of different wavelengths, and the wind field information can be measured in real time, thereby improving the measurement accuracy of the wind field information.

In view of the above embodiment, the signal processing device 140 may obtain the wind field information based on the return light signal in the following manner: the signal processing device 140 calculates a power spectrum of the return light signal, and obtains the wind field information according to the power spectrum of the return light signal. Since the power spectrum of the return light signal carries corresponding wind field information, it is more convenient to obtain the wind field information according to the power spectrum of the return light signal.

Specifically, as shown in FIG. 3, the wind field information generally includes wind velocity and wind direction which can be obtained from the information carried in the two return light signals, for example, the power spectrum of the return light signal includes two signal peak values $f_{p1}$ and $f_{p2}$ which are frequency spectrum peak values corresponding to the two return light signals, if $|f_{p1}-f_1| \leq |f_{p2}-f_1|$, the radial velocities are calculated by the formulas: $v_1 = \lambda_1(f_{p1}-f_1)/2$ $v_2 = \lambda_2(f_{p2}-f_2)/2$ and if $|f_{p1}-f_1| > |f_{p2}-f_1|$, the radial velocities are calculated by the formulas: $v_1 = \lambda_1(f_{p2}-f_1)/2$, $v_2 = \lambda_2(f_{p1}-f_2)/2$. Therefore, the signal processing device 140 can obtain the first radial velocity based on $v_1 = \lambda_1(f_{p1}-f_1)/2$ or $v_1 = \lambda_1(f_{p2}-f_1)/2$, obtain the second radial velocity based on $v_2 = \lambda_2(f_{p2}-f_2)/2$ or $v_2 = \lambda_2(f_{p1}-f_2)/2$, and obtain the wind velocity and the wind direction in the wind field information based on

$$\begin{cases} u = \dfrac{v_1 + v_2}{2\cos\dfrac{\gamma}{2}} \\ v = \dfrac{v_1 - v_2}{2\sin\dfrac{\gamma}{2}} \end{cases}.$$

In the above formulas, $\gamma$ is an angle between the first return light signal and the second return light signal, $\lambda_1$ is the wavelength of the first light signal, $\lambda_2$ is the wavelength of the second light signal, $f_1$ is the frequency of the first light signal, $f_2$ is the frequency of the second light signal, $f_{p1}$ and $f_{p2}$ are two peak frequencies in the power spectrum of the return light signal, the wind velocity is $v_g = \sqrt{u^2 + v^2}$, and the wind direction is $\theta_g = \arctan\left(\dfrac{v}{u}\right)$. Therefore, the signal processing device 140 can obtain the wind velocity and the wind direction in the wind field information in the above manner.

In the above implementation process, the wind velocity and the wind direction in the wind field information can be obtained through vector operation according to the information carried in the first return light signal and the second return light signal, and thereby more accurate information of the wind field in front of the wind turbine can be obtained.

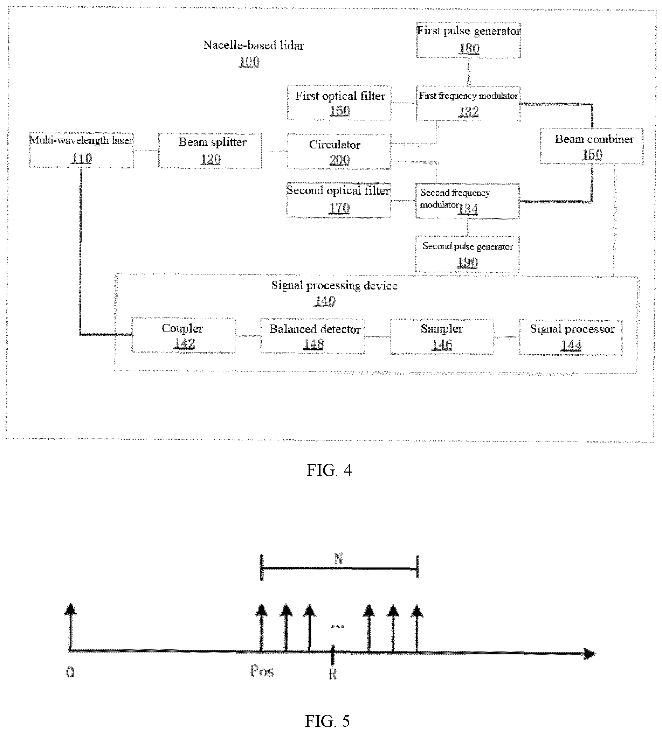

Referring to FIG. 4, FIG. 4 is a schematic diagram showing another structure of the nacelle-based lidar 100 according to an embodiment of the present disclosure. The nacelle-based lidar 100 further includes a first optical filter 160 and a second optical filter 170. The first optical filter 160 and the second optical filter 170 are both connected to the beam splitter 120. The beam splitter 120 splits the light signals into a first light signal and a second light signal, inputs the first light signal and the second light signal into the first optical filter 160, and inputs the first light signal and the second light signal into the second filter. After the first light signal and the second light signal pass through the first optical filter 160, the wavelength component of the second light signal is filtered out by the first optical filter 160, and thus the first optical filter 160 outputs the first light signal. After the first light signal and the second light signal pass through the second optical filter 170, the wavelength component of the first light signal is filtered out by the second optical filter 170, and thus the second optical filter 170 outputs the second light signal.

The nacelle-based lidar 100 may further include a pulse generator. The pulse generator is connected to the frequency modulator 130, and is used for generating pulse signals of different frequencies and inputting the pulse signals into the frequency modulator 130. Then, the frequency modulator 130 performs frequency modulation on the first light signal and the second light signal based on the pulse signals.

Specifically, the first light signal is denoted by $x = \cos(2\pi f_1 t)$, and the frequency modulator 130 performs frequency modulation on the first light signal and the first pulse signal generated by the pulse generator to obtain a first transmit signal $y_1 = \cos\left(2\pi(f_1 + \Delta f_1)t\right) rect\left(\dfrac{\tau}{T}\right)$ and transmits the first transmit signal. The second light signal is denoted by $x = \cos(2\pi f_2 t)$, and the frequency modulator 130 performs frequency modulation on the second light signal and the second pulse signal generated by the pulse generator to obtain a second transmit signal $y_2 = \cos\left(2\pi(f_2 + \Delta f_2)t\right) rect\left(\dfrac{\tau}{T}\right)$ and transmits the second transmit signal, wherein $f_1$ is the frequency of the first light signal, $f_2$ is the frequency of the second light signal, $\tau$ is pulse width, $T$ is a repetition cycle of the pulse signal, $\Delta f_1$ is a frequency shift of the first light signal, and $\Delta f_2$ is a frequency shift of the second light signal.

In the above implementation process, the pulse generator generates the pulse signals, and the frequency modulator performs frequency modulation on the first light signal and the second light signal based on the pulse signals, so that the frequency modulator does not need to generate pulse signals for the frequency modulation on the light signals, thereby reducing the data processing load of the frequency modulator.

To raise the signal processing speed, the pulse generator may include a first pulse generator 180 and a second pulse generator 190. The first pulse generator 180 is used for generating a first pulse signal and inputting the signal into the frequency modulator 130. The second pulse generator 190 is used for generating a second pulse signal and inputting the signal into the frequency modulator 130. Definitely, to ensure that the two light pulse signals can be sent simultaneously, the frequency modulator 130 may also include a first frequency modulator 132 and a second frequency modulator 134. The first frequency modulator 132 is used for receiving the first pulse signal and the first light signal, and performing frequency modulation on the first light signal. The second frequency modulator 134 is used for receiving the second pulse signal and the second light signal, and performing frequency modulation on the second light signal.

Further, to ensure that aliasing does not occur in the frequency spectrum of the first return light signal and the second return light signal, $|f_1\text{-}f_2|>\Delta f_1$ and $|f_1\text{-}f_2|>\Delta f_2$, and the value of $|f_1\text{-}f_2|$ is much larger than $\Delta f_1$ or $\Delta f_2$.

To ensure that Doppler frequencies of wind velocity of the two beams can be distinguished from each other, $\Delta f_1$ differs from $\Delta f_2$ by a preset frequency value, that is, $\Delta f_1$ and $\Delta f_2$ are at a certain interval.

In a possible implementation manner, the signal processing device 140 further includes a coupler 142 and a signal processor 144. The coupler 142 is connected to the multi-wavelength laser 110, the beam combiner, and the signal processor 144. The coupler 142 is used for beating the return light signal with the seed light signal. The coupler 142 firstly receives the initial return light signal, and then beats the initial return light signal with the light signal to obtain the return light signal. The signal processor 144 is used for receiving the return light signal, and obtaining the wind field information according to the return light signal. The initial return light signal is $y_r = \sum_i \cos\left(2\pi(f_i + \Delta f_i + f_{d_i})t\right)$, the light signal is $x = \cos(2\pi f_1 t)+\cos(2\pi f_2 t)$, and the return light signal is $y_d = \sum_i \cos\left(2\pi(\Delta f_i + f_{d_i})t\right)$, $i$=1, 2, $f_i$ is the frequency corresponding to the $i^{th}$ light signal, $\Delta f_i$ is a frequency shift corresponding to the $i^{th}$ wavelength, and $f_{d_i}$ is a Doppler frequency of the return light signal.

In the above implementation process, since the frequency of the return light signal is generally large, the beating of the return light signal with the light signal by the coupler facilitates subsequent sampling of the return light signal.

In a possible implementation manner, the signal processing device 140 further includes a sampler 146. The sampler 146 is connected to the coupler 142 and the signal processor 144. The sampler 146 is used for implementing conversion from an analog signal to a digital signal, that is, before the signal processing device 140 obtains the wind field information based on the return light signal, the sampler 146 samples the return light signal to obtain a sampled return light signal. To avoid aliasing in the frequency spectrum, the sampling frequency needs to satisfy the Nyquist sampling theorem, and assuming that the required signal bandwidth is $B$, the sampling frequency satisfies the relationship of: $F_s \geq 2Max(\Delta f_i+B/2)$, and the sampled return light signal is:

$$s(n) = \sum_i \cos\left(2\pi(\Delta f_i + f_{d_i})\frac{2\pi n}{Fs}\right),$$

wherein $n$ is the number of sampling points.

In the above implementation process, since the sampler is used for sampling the return light signal, the signal processor 144 does not need to perform sampling, thereby reducing the data processing pressure of the signal processor 144.

During the measurement of the wind field information, the signal processor 144 140 firstly calculates the power spectrum of the received return light signal in the following process: performing range gate division on the return light signal, calculating the power spectrum of each range gate, and after pulse accumulation for a certain period of time, removing the background noise to obtain the signal power spectrum.

As shown in FIG. 5, FIG. 5 is a schematic diagram showing range gate division of a return light signal. Since the nacelle-based lidar 100 needs to simultaneously measure the wind field information of multiple range gates, the position of the initial point needs to be calculated according to the distance from the measurement section. As shown in FIG. 5, the distance from the section is R, and the position of the initial point is: $Pos = \frac{2R}{c} \cdot F_s - N/2$, wherein c is the transmission rate of the light signal, N is the number of sampling points contained in each range gate, and $F_s$ is the sampling frequency.

To improve the operation efficiency, the power spectrum of the return light signal is calculated by using a periodogram method, and Fourier transform (FFT) is performed on the sampled return light signal $s(n)$ to obtain the power spectrum of the return light signal:

$$S(k) = \sum_{n=0}^{N-1} s(n) e^{-j\frac{2\pi}{N}kn}, 0 \le n \le N-1$$
.

Therefore, after obtaining the power spectrum of the return light signal, the signal processor 144 can calculate the wind field information based on the power spectrum in a manner that is shown in the above embodiment and will not be described herein again.

In a possible implementation manner, the signal processing device 140 may also include a balanced detector 148. The balanced detector 148 is connected to the coupler 142 and the sampler 146. Definitely, the balanced detector 148 may also be connected to the coupler 142 and the sampler 146. The balanced detector 148 is used for implementing conversion between light signals and electrical signals and suppressing common-mode signals.

Further, in a possible implementation manner, the nacelle-based lidar 100 may also include a circulator 200. The circulator 200 is connected to the frequency modulator 130 and the beam splitter 120, and is used for isolating transmit/receive signals. When the light signal is transmitted, the light signal can only pass through an output port almost without loss, and thus the strength of the reflected signal on a receiving branch section is suppressed.

In a possible implementation manner, the nacelle-based lidar 100 may also include an optical antenna used for improving the transmitting/receiving efficiency of the light signal. During signal transmission, the transmission distance of the light signal can be ensured as much as possible by adjusting the focal length of the telescope in the nacelle-based lidar 100. During signal reception, the telescope can gather return light scattered in different directions and converge into collimated light, thereby improving the receiving efficiency.

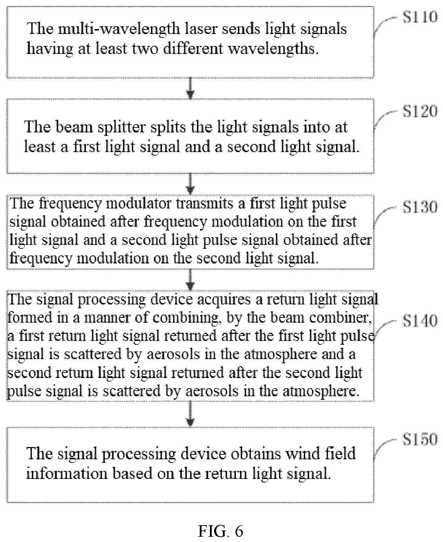

Referring to FIG. 6, FIG. 6 is a flow chart of a wind field information measurement method according to an embodiment of the present disclosure. The method is applied in the nacelle-based lidar, and includes the following steps.

Step S110: the multi-wavelength laser sends light signals having at least two different wavelengths.

Step S120: the beam splitter splits the light signals into at least a first light signal and a second light signal.

The wavelength of the first light signal is a first wavelength, and the wavelength of the second light signal is a second wavelength.

Step S130: the frequency modulator transmits a first light pulse signal obtained after frequency modulation on the first light signal and a second light pulse signal obtained after frequency modulation on the second light signal.

Step S140: the signal processing device acquires a return light signal formed in a manner of combining, by the beam combiner, a first return light signal returned after the first light pulse signal is scattered by aerosols in the atmosphere and a second return light signal returned after the second light pulse signal is scattered by aerosols in the atmosphere.

Step S150: the signal processing device obtains wind field information based on the return light signal.

Optionally, the obtaining, by the signal processing device, wind field information based on the return light signal includes: calculating, by the signal processing device, a power spectrum of the return light signal; and obtaining, by the signal processing device, the wind field information according to the power spectrum of the return light signal.

Optionally, the obtaining, by the signal processing device, the wind field information according to the power spectrum of the return light signal includes: obtaining, by the signal processing device, a first radial velocity based on $v_1 = \lambda_1(f_{p1}-f_1)/2$ or $v_1 = \lambda_1(f_{p2}-f_1)/2$ obtaining, by the signal processing device, a second radial velocity based on $v_2 = \lambda_2(f_{p2}-f_2)/2$ or $v_2 = \lambda_2(f_{p1}-f_2)/2$ and obtaining, by the signal processing device, wind velocity and wind direction in the wind field information based on

$$\begin{cases} u = \dfrac{v_1 + v_2}{2\cos\dfrac{\gamma}{2}} \\ v = \dfrac{v_1 - v_2}{2\sin\dfrac{\gamma}{2}} \end{cases}$$
,

wherein y is an angle between the first return light signal and the second return light signal, $\lambda_1$ is the wavelength of the first light signal, $\lambda_2$ is the wavelength of the second light signal, $f_1$ is the frequency of the first light signal, $f_2$ is the frequency of the second light signal, $f_{p1}$ and $f_{p2}$ are two peak frequencies in the power spectrum of the return light signal, the wind velocity is $v_g = \sqrt{u^2 + v^2}$, and the wind direction is $\theta_g = \arctan\left(\dfrac{v}{u}\right)$.

Optionally, the nacelle-based lidar further includes a pulse generator, the pulse generator being connected to the frequency modulator; the transmitting, by the frequency modulator, a first light pulse signal obtained after frequency modulation on the first light signal and a second light pulse signal obtained after frequency modulation on the second light signal includes: acquiring, by the frequency modulator, a first pulse signal and a second pulse signal generated by the pulse generator; performing, by the frequency modulator, frequency modulation on the first light signal $x = \cos(2\pi f_1 t)$ and the first pulse signal to obtain a first transmit signal $y_1 = \cos\left(2\pi(f_1 + \Delta f_1)t\right) rect\left(\dfrac{\tau}{T}\right)$ and transmitting the first transmit signal; and performing, by the frequency modulator, frequency modulation on the second light signal $x = \cos(2\pi f_2 t)$ and the second pulse signal to obtain a second transmit signal $y_2 = \cos\left(2\pi(f_2 + \Delta f_2)t\right)rect\left(\dfrac{\tau}{T}\right)$ and transmitting the second transmit signal,

wherein $f_1$ is the frequency of the first light signal, $f_2$ is the frequency of the second light signal, $\tau$ is pulse width, $T$ is a repetition cycle of the pulse signal, $\Delta f_1$ is a frequency shift of the first light signal, and $\Delta f_2$ is a frequency shift of the second light signal.

Optionally, to ensure that aliasing does not occur in the frequency spectrum of the return light signals, $|f_1\text{-}f_2|>\Delta f_1$ and $|f_1\text{-}f_2|>\Delta f_2$.

Optionally, to ensure that Doppler frequencies of the two light pulse signals can be distinguished from each other, $\Delta f_1$ differs from $\Delta f_2$ by a preset frequency value.

Optionally, the signal processing device includes a coupler and a signal processor, the coupler being connected to the multi-wavelength laser, the beam combiner, and the signal processor; before the acquiring, by the signal processing device, a return light signal formed in a manner of combining, by the beam combiner, a first return light signal returned after the first light pulse signal is scattered by aerosols in the atmosphere and a second return light signal returned after the second light pulse signal is scattered by aerosols in the atmosphere, the method further includes: beating, by the coupler, the obtained initial return light signal with the light signal to obtain the return light signal,

wherein the initial return light signal is $y_r = \sum_i \cos\left(2\pi(f_i + \Delta f_i + f_{d_i})t\right)$ the light signal is $x = \cos(2\pi f_1 t) + \cos(2\pi f_2 t)$, and the return light signal is $y_d = \sum_i \cos\left(2\pi(\Delta f_i + f_{d_i})t\right)$;

$i$=1, 2, $f_i$ is the frequency corresponding to the $i$th light signal, $\Delta f_i$ is a frequency shift corresponding to the $i$th wavelength, and $f_{d_i}$ is a Doppler frequency of the return light signal.

Optionally, the signal processing device further includes a sampler, the sampler being connected to the coupler and the signal processor; before the obtaining, by the signal processing device, wind field information based on the return light signal, the method further includes:

sampling, by the sampler, the return light signal to obtain a sampled return light signal,

wherein the sampling frequency satisfies the Nyquist sampling theorem: $F_s \geq 2Max(\Delta f_i + B/2)$, the sampled return light signal is $s(n) = \sum_i \cos\left(2\pi(\Delta f_i + f_{d_i})\dfrac{2\pi n}{Fs}\right)$,

$B$ is signal bandwidth, and $n$ is the number of sampling points.

Persons skilled in the art can clearly understand that, for the convenience and conciseness of the description, the specific working process of the device described above can be known with reference to the corresponding process in the aforementioned method, and will not be described herein again.

In view of the above, the embodiments of the present disclosure provide a wind field information measurement method and a nacelle-based lidar. In the method, the multi-wavelength laser sends light signals having at least two different wavelengths; the beam splitter splits the light signals into at least a first light signal and a second light signal; the frequency modulator transmits a first light pulse signal obtained after frequency modulation on the first light signal and a second light pulse signal obtained after frequency modulation on the second light signal; the signal processing device acquires a return light signal formed in a manner of combining, by the beam combiner, a first return light signal returned after the first light pulse signal is scattered by aerosols in the atmosphere and a second return light signal returned after the second light pulse signal is scattered by aerosols in the atmosphere; and the signal processing device obtains wind field information based on the return light signal. Therefore, in this solution, the wind field information is measured by simultaneously transmitting at least two light signals having different wavelengths, so that the wind field information can be measured in real time, thereby avoiding the problem in the prior art that because two light signals are periodically and alternately transmitted for measurement of the wind field information and a single beam is blocked by an impeller of the wind turbine, the data refresh rate and data effective rate are reduced and the wind field information in the transmission time interval cannot be measured, resulting in inaccurate measurement of the wind field information.

The foregoing descriptions are merely preferred embodiments of the present disclosure, and are not intended to limit the present disclosure. It is apparent to persons skilled in the art that, the present disclosure may have various modifications and changes. Any modification, equivalent replacement, improvement, etc. made within the spirit and principle of the present disclosure shall fall within the protection scope of the present disclosure.

Industrial applicability

The present disclosure can measure the wind field information in real time, thereby avoiding the problem in the prior art that because two light signals are periodically and alternately transmitted for measurement of the wind field information and a single beam is blocked by an impeller of the wind turbine, the data effective rate is reduced and the wind field information in the transmission time interval cannot be measured, resulting in inaccurate measurement of the wind field information.

**Claims**

1. A wind field information measurement method, **characterized in that** the method is applied in a nacelle-based lidar, the nacelle-based lidar is mounted on a wind turbine and comprises a multi-wavelength laser, a beam splitter, a frequency modulator, a beam combiner, and a signal processing device, the multi-wavelength laser is connected to the beam splitter, the beam splitter is connected to the frequency modulator, the frequency modulator is connected to the signal processing device, and the beam combiner is connected to the signal processing device, the method comprising:

sending, by the multi-wavelength laser, light signals having at least two different wavelengths;
splitting, by the beam splitter, the light signals into at least a first light signal and a second light signal, the wavelength of the first light signal being a first wavelength, and the wavelength of the second light signal being a second wavelength;
transmitting, by the frequency modulator, a first light pulse signal obtained after frequency modulation on the first light signal and a second light pulse signal obtained after frequency modulation on the second light signal;
acquiring, by the signal processing device, a return light signal formed in a manner of combining, by the beam combiner, a first return light signal returned after the first light pulse signal is scattered by aerosols in the atmosphere and a second return light signal returned after the second light pulse signal is scattered by aerosols in the atmosphere; and
obtaining, by the signal processing device, wind field information based on the return light signal.

2. The method according to claim 1, **characterized in that** the obtaining, by the signal processing device, the wind field information based on the return light signal comprises:

calculating, by the signal processing device, a power spectrum of the return light signal; and
obtaining, by the signal processing device, the wind field information according to the power spectrum of the return light signal.

3. The method according to claim 2, **characterized in that** the obtaining, by the signal processing device, the wind field information according to the power spectrum of the return light signal comprises:

obtaining, by the signal processing device, a first radial velocity based on $v_1 = \lambda_1(f_{p_1}\text{-}f_1)/2$ or $v_1 = \lambda_1(f_{p_2}\text{-}f_1)/2$;
obtaining, by the signal processing device, a second radial velocity based on $v_1 = \lambda_2(f_{p_2}\text{-}f_2)/2$ or $v_2 = \lambda_2(f_{p_1}\text{-}f_2)/2$; and
obtaining, by the signal processing device, wind velocity and wind direction in the wind field information based on

$$\begin{cases} u = \dfrac{v_1 + v_2}{2\cos\dfrac{\gamma}{2}} \\ v = \dfrac{v_1 - v_2}{2\sin\dfrac{\gamma}{2}} \end{cases},$$

wherein y is an angle between the first return light signal and the second return light signal, $\lambda_1$ is the wavelength of the first light signal, $\lambda_2$ is the wavelength of the second light signal, $f_1$ is the frequency of the first light signal, $f_2$ is the frequency of the second light signal, $f_{p_1}$ and $f_{p_2}$ are two peak frequencies in the power spectrum of the return light signal, the wind velocity is $v_g = \sqrt{u^2 + v^2}$, and the wind direction is $\theta_g = \arctan\left(\dfrac{v}{u}\right)$.

4. The method according to claim 1, **characterized in that** the nacelle-based lidar further comprises a pulse generator, the pulse generator being connected to the frequency modulator; the transmitting, by the frequency modulator, a first light pulse signal obtained after frequency modulation on the first light signal and a second light pulse signal obtained after frequency modulation on the second light signal comprises:

acquiring, by the frequency modulator, a first pulse signal and a second pulse signal generated by the pulse generator;
performing, by the frequency modulator, frequency modulation on the first light signal $x = \cos(2\pi f_1 t)$ and the first pulse signal to obtain a first transmit signal $y_1 = \cos\left(2\pi(f_1 + \Delta f_1)t\right)rect\left(\dfrac{\tau}{T}\right)$ and transmitting the first transmit signal; and
performing, by the frequency modulator, frequency modulation on the second light signal $x = \cos(2\pi f_2 t)$ and the second pulse signal to obtain a second transmit signal $y_2 = \cos\left(2\pi(f_2 + \Delta f_2)t\right)rect\left(\dfrac{\tau}{T}\right)$ and transmitting the second transmit signal,

wherein $f_1$ is the frequency of the first light signal, $f_2$ is the frequency of the second light signal, $\tau$ is pulse width, $T$ is a repetition cycle of the pulse signal, $\Delta f_1$ is a frequency shift of the first light signal, and $\Delta f_2$ is a frequency shift of the second light signal.

5. The method according to claim 4, **characterized in that** $|f_1\text{-}f_2|>\Delta f_1$ and $|f_1\text{-}f_2|>\Delta f_2$.

6. The method according to claim 4, **characterized in that** $\Delta f_1$ differs from $\Delta f_2$ by a preset frequency value.

7. The method according to claim 1, **characterized in that** the signal processing device comprises a coupler and a signal processor, the coupler being connected to the multi-wavelength laser, the beam combiner, and the signal processor; before the acquiring, by the signal processing device, a return light signal formed in a manner of combining, by the beam combiner, a first return light signal returned after the first light pulse signal is scattered by aerosols in the atmosphere and a second return light signal returned after the second light pulse signal is scattered by aerosols in the atmosphere, the method further comprises:

beating, by the coupler, the obtained initial return light signal with the light signal to obtain the return light signal,
wherein the initial return light signal is $y_r = \sum_i \cos\left(2\pi(f_i + \Delta f_i + f_{d_i})t\right)$, the light signal is $x = \cos(2\pi f_1 t) + \cos(2\pi f_2 t)$, and the return light signal is $y_d = \sum_i \cos\left(2\pi(\Delta f_i + f_{d_i})t\right)$;
$i$=1, 2, $f_i$ is the frequency corresponding to the $i^{th}$ light signal, $\Delta f_i$ is a frequency shift corresponding to the $i^{th}$ wavelength, and $f_{di}$ is a Doppler frequency of the return light signal.

8. The method according to claim 7, **characterized in that** the signal processing device further comprises a sampler, the sampler being connected to the coupler and the signal processor; before the obtaining, by the signal processing device, wind field information based on the return light signal, the method further comprises:

sampling, by the sampler, the return light signal to obtain a sampled return light signal,
wherein the sampling frequency satisfies the Nyquist sampling theorem: $F_s \geq 2Max(\Delta f_i + B/2)$, the sampled return light signal is $s(n) = \sum_i \cos\left(2\pi(\Delta f_i + f_{d_i})\dfrac{2\pi n}{Fs}\right)$, $B$ is signal bandwidth, and $n$ is the number of sampling points.

9. A nacelle-based lidar, **characterized in that** the nacelle-based lidar is mounted on a wind turbine and comprises a multi-wavelength laser, a beam splitter, a frequency modulator, a beam combiner, and a signal processing device, the multi-wavelength laser is connected to the beam splitter, the beam splitter is connected to the frequency modulator, the frequency modulator is connected to the signal processing device, and the beam combiner is connected to the signal processing device;
the multi-wavelength laser is used for sending light signals having at least two different wavelengths;
the beam splitter is used for splitting the light signals into at least a first light signal and a second light signal, the wavelength of the first light signal being a first wavelength, and the wavelength of the second light signal being a second wavelength;
the frequency modulator is used for transmitting a first light pulse signal obtained after frequency modulation on the first light signal and a second light pulse signal obtained after frequency modulation on the second light signal;
the signal processing device is used for acquiring a return light signal formed in a manner of combining, by the beam combiner, a first return light signal returned after the first light pulse signal is scattered by aerosols in the atmosphere and a second return light signal returned after the second light pulse signal is scattered by aerosols in the atmosphere; and
the signal processing device is further used for obtaining wind field information based on the return light signal.

10. The nacelle-based lidar according to claim 9, **characterized in that** the signal processing device comprises a signal processor, and the signal processor is used for calculating a power spectrum of the return light signal; and obtaining the wind field information according to the power spectrum of the return light signal.

11. The nacelle-based lidar according to claim 9, **characterized in that** the signal processing device is further used for obtaining a first radial velocity based on $v_1 = \lambda_1(f_{p1}\text{-}f_1)/2$ or $v_1 = \lambda_1(f_{p2}\text{-}f_1)/2$ obtaining a second radial velocity based on $v_2 = \lambda_2(f_{p2}\text{-}f_2)/2$ or $v_2 = \lambda_2(f_{p1}\text{-}f_2)/2$; and obtaining wind velocity and wind direction in the wind field information based on

$$\begin{cases} u = \dfrac{v_1 + v_2}{2\cos\dfrac{\gamma}{2}} \\ v = \dfrac{v_1 - v_2}{2\sin\dfrac{\gamma}{2}} \end{cases},$$

wherein y is an angle between the first return light signal and the second return light signal, $\lambda_1$ is the wavelength of the first light signal, $\lambda_2$ is the wavelength of the second light signal, $f_1$ is the frequency of the first light signal, $f_2$ is the frequency of the second light signal, $f_{p1}$ and $f_{p2}$ are two peak frequencies in the power spectrum of the return light signal, the wind velocity is $v_g = \sqrt{u^2 + v^2}$, and the wind direction is $\theta_g = \arctan\left(\dfrac{v}{u}\right)$.

12. The nacelle-based lidar according to claim 9, **characterized in that** the nacelle-based lidar further comprises a pulse generator, the pulse generator being connected to the frequency modulator;
the frequency modulator is further used for acquiring a first pulse signal and a second pulse signal generated by the pulse generator;
the frequency modulator is further used for performing frequency modulation on the first light signal $x = \cos(2\pi f_1 t)$ and the first pulse signal to obtain a first transmit signal

$$y_1 = \cos\left(2\pi(f_1 + \Delta f_1)t\right) rect\left(\frac{\tau}{T}\right)$$ and transmitting the first transmit signal; and

the frequency modulator is further used for performing frequency modulation on the second light signal $x = \cos(2\pi f_2 t)$ and the second pulse signal to obtain a second transmit signal

$$y_2 = \cos\left(2\pi(f_2 + \Delta f_2)t\right) rect\left(\frac{\tau}{T}\right)$$ and

transmitting the second transmit signal,
wherein $f_1$ is the frequency of the first light signal, $f_2$ is the frequency of the second light signal, $\tau$ is pulse width, $T$ is a repetition cycle of the pulse signal, $\Delta f_1$ is a frequency shift of the first light signal, and $\Delta f_2$ is a frequency shift of the second light signal.

13. The nacelle-based lidar according to claim 12, **characterized in that** $|f_1 - f_2| > \Delta f_1$ and $|f_1 - f_2| > \Delta f_2$.

14. The nacelle-based lidar according to claim 12, **characterized in that** $\Delta f_1$ differs from $\Delta f_2$ by a preset frequency value.

15. The nacelle-based lidar according to claim 9, **char-**

**acterized in that** the signal processing device comprises a coupler and a signal processor, the coupler being connected to the multi-wavelength laser, the beam combiner, and the signal processor;
the coupler is used for beating the obtained initial return light signal with the light signal to obtain the return light signal,
wherein the initial return light signal is

$$y_r = \sum_i \cos\left(2\pi(f_i + \Delta f_i + f_{d_i})t\right)$$ the light signal is $x$

$= \cos(2\pi f_1 t) + \cos(2\pi f_2 t)$, and the return light signal is $y_d = \sum_i \cos\left(2\pi(\Delta f_i + f_{d_i})t\right)$;

$i = 1, 2, f_i$ is the frequency corresponding to the $i$th light signal, $\Delta f_i$ is a frequency shift corresponding to the $i$th wavelength, and $f_{d_i}$ is a Doppler frequency of the return light signal.

16. The nacelle-based lidar according to claim 15, **characterized in that** the signal processing device further comprises a sampler, the sampler being connected to the coupler and the signal processor;
the sampler is used for sampling the return light signal to obtain a sampled return light signal,
wherein the sampling frequency satisfies the Nyquist sampling theorem: $F_s \geq 2Max(\Delta f_i + B/2)$, the sampled return light signal is $s(n) = \sum_i \cos\left(2\pi(\Delta f_i + f_{d_i})\dfrac{2\pi n}{Fs}\right)$,

$B$ is signal bandwidth, and $n$ is the number of sampling points.

17. The nacelle-based lidar according to claim 16, **characterized in that** the signal processing device further comprises a balanced detector, the balanced detector being connected to the coupler and the sampler.

18. The nacelle-based lidar according to claim 9, **characterized in that** the nacelle-based lidar further comprises a circulator, the circulator being connected to the frequency modulator and the beam splitter.

19. The nacelle-based lidar according to claim 9, **characterized in that** the nacelle-based lidar further comprises a first optical filter and a second optical filter, the first optical filter and the second optical filter being both connected to the beam splitter;
the first optical filter is used for filtering the first light signal and then sending the signal to the frequency modulator; and
the second optical filter is used for filtering the second light signal and then sending the signal to the frequency modulator.

FIG. 1

FIG. 2

FIG. 3

Nacelle-based lidar
100

First pulse generator
180

First optical filter
160

First frequency modulator
132

Multi-wavelength laser
110

Beam splitter
120

Circulator
200

Beam combiner
150

Second optical filter
170

Second frequency modulator 134

Second pulse generator
190

Signal processing device
140

Coupler
142

Balanced detector
148

Sampler
146

Signal processor
144

FIG. 4

N

0    Pos    R

FIG. 5

The multi-wavelength laser sends light signals having at least two different wavelengths. S110

The beam splitter splits the light signals into at least a first light signal and a second light signal. S120

The frequency modulator transmits a first light pulse signal obtained after frequency modulation on the first light signal and a second light pulse signal obtained after frequency modulation on the second light signal. S130

The signal processing device acquires a return light signal formed in a manner of combining, by the beam combiner, a first return light signal returned after the first light pulse signal is scattered by aerosols in the atmosphere and a second return light signal returned after the second light pulse signal is scattered by aerosols in the atmosphere. S140

The signal processing device obtains wind field information based on the return light signal. S150

FIG. 6

## INTERNATIONAL SEARCH REPORT

| International application No. |
|---|
| **PCT/CN2018/118859** |

**A.    CLASSIFICATION OF SUBJECT MATTER**

G01S 17/95(2006.01)i;  G01S 17/32(2006.01)i

According to International Patent Classification (IPC) or to both national classification and IPC

**B.    FIELDS SEARCHED**

Minimum documentation searched (classification system followed by classification symbols)

G01S

Documentation searched other than minimum documentation to the extent that such documents are included in the fields searched

Electronic data base consulted during the international search (name of data base and, where practicable, search terms used)

WPI, EPODOC, CNPAT, CNKI: 气溶胶, 雷达, 探测, 光束, 分束器, 合束器, 波长, 双, 调制, 散射, aerosol, lidar, detect+, beam, splitter, combiner, wavelength, dual, modulat+, scatter

**C.    DOCUMENTS CONSIDERED TO BE RELEVANT**

| Category* | Citation of document, with indication, where appropriate, of the relevant passages | Relevant to claim No. |
|---|---|---|
| X | CN 107807367 A (NANJING MOVELASER CO., LTD.) 16 March 2018 (2018-03-16) description, paragraphs [0003] and [0014]-[0046], and figures 1-5 | 1, 2, 9, 10, 18, 19 |
| A | CN 103946716 A (MITSUBISHI ELECTRIC CORPORATION) 23 July 2014 (2014-07-23) entire document | 1-19 |
| A | CN 105572690 A (UNIVERSITY OF SCIENCE AND TECHNOLOGY OF CHINA) 11 May 2016 (2016-05-11) entire document | 1-19 |
| A | CN 105785395 A (SICHUAN ZHIZHOU TECHNOLOGY CO., LTD.) 20 July 2016 (2016-07-20) entire document | 1-19 |
| A | CN 206773190 U (NANJING INSTITUTE OF ADVANCED LASER TECHNOLOGY) 19 December 2017 (2017-12-19) entire document | 1-19 |
| A | CN 106886031 A (NANJING HONGLULIN LASER RADAR TECHNOLOGY CO., LTD.) 23 June 2017 (2017-06-23) entire document | 1-19 |

☑ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 July 2019** | **28 August 2019** |

| Name and mailing address of the ISA/CN | Authorized officer |
|---|---|
| **China National Intellectual Property Administration (ISA/ CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2018/118859** |

**C.    DOCUMENTS CONSIDERED TO BE RELEVANT**

| Category* | Citation of document, with indication, where appropriate, of the relevant passages | Relevant to claim No. |
|---|---|---|
| A | US 2013325213 A1 (OPTICAL AIR DATA SYSTEMS, LLC) 05 December 2013 (2013-12-05)<br>     entire document | 1-19 |
| A | US 2018284226 A1 (LUMINAR TECHNOLOGIES, INC.) 04 October 2018 (2018-10-04)<br>     entire document | 1-19 |

Form PCT/ISA/210 (second sheet) (January 2015)

**INTERNATIONAL SEARCH REPORT**
Information on patent family members

| International application No. |
| --- |
| **PCT/CN2018/118859** |

| Patent document cited in search report | | | Publication date (day/month/year) | Patent family member(s) | | | Publication date (day/month/year) |
| --- | --- | --- | --- | --- | --- | --- | --- |
| CN | 107807367 | A | 16 March 2018 | CN | 107807367 | B | 12 April 2019 |
| CN | 103946716 | A | 23 July 2014 | CN | 103946716 | B | 11 May 2016 |
| | | | | WO | 2013094431 | A1 | 27 June 2013 |
| | | | | JP | 5738436 | B2 | 24 June 2015 |
| | | | | EP | 2796890 | A1 | 29 October 2014 |
| | | | | JP | WO2013094431 | A1 | 27 April 2015 |
| | | | | US | 9310487 | B2 | 12 April 2016 |
| | | | | US | 2014233013 | A1 | 21 August 2014 |
| | | | | EP | 2796890 | B1 | 28 June 2017 |
| CN | 105572690 | A | 11 May 2016 | CN | 105572690 | B | 30 January 2018 |
| CN | 105785395 | A | 20 July 2016 | CN | 105785395 | B | 09 March 2018 |
| CN | 206773190 | U | 19 December 2017 | None | | | |
| CN | 106886031 | A | 23 June 2017 | None | | | |
| US | 2013325213 | A1 | 05 December 2013 | US | 8930049 | B2 | 06 January 2015 |
| US | 2018284226 | A1 | 04 October 2018 | US | 10254388 | B2 | 09 April 2019 |

Form PCT/ISA/210 (patent family annex) (January 2015)